(19) **Europäisches Patentamt**
**European Patent Office**
**Office européen des brevets**

(11) **EP 4 730 159 A1**

(12) **EUROPEAN PATENT APPLICATION**
published in accordance with Art. 153(4) EPC

(43) Date of publication:
**22.04.2026 Bulletin 2026/17**

(21) Application number: **24842337.8**

(22) Date of filing: **15.07.2024**

(51) International Patent Classification (IPC):
**G06F 17/10** $^{(2006.01)}$ **G06F 17/11** $^{(2006.01)}$

(52) Cooperative Patent Classification (CPC):
**G06F 17/10; G06F 17/11; G06Q 10/047**

(86) International application number:
**PCT/CN2024/105388**

(87) International publication number:
**WO 2025/016344 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.07.2023 CN 202310898465**

(71) Applicant: **Huawei Technologies Co., Ltd.**
**Shenzhen, Guangdong 518129 (CN)**

(72) Inventors:
• **YUN, Zhiqiang**
**Shenzhen, Guangdong 518129 (CN)**

• **FANG, Tao**
**Shenzhen, Guangdong 518129 (CN)**
• **WANG, Yao**
**Shenzhen, Guangdong 518129 (CN)**
• **DONG, Xiaowen**
**Shenzhen, Guangdong 518129 (CN)**
• **YUNG, Manhong**
**Shenzhen, Guangdong 518129 (CN)**

(74) Representative: **Maiwald GmbH**
**Elisenhof**
**Elisenstraße 3**
**80335 München (DE)**

(54) **METHOD, APPARATUS AND SYSTEM FOR SOLVING COMBINATORIAL OPTIMIZATION PROBLEM**

(57) A method for solving a combinatorial optimization problem, an apparatus, and a system are provided. The method includes: receiving a combinatorial optimization problem input by a user; mapping the combinatorial optimization problem to a model, where the model includes a to-be-solved complex variable and an objective function, the to-be-solved complex variable is used to describe a solution in which permutation and combination of things meet a requirement as a discrete variable in a complex number field, and the objective function is used to describe the permutation and combination of a plurality of things under a given constraint condition; determining a dynamic equation for the model in the complex number field, where the dynamic equation is used to describe a time-based evolution process of the to-be-solved complex variable, and the dynamic equation includes at least a control variable, a multi-bifurcation parameter, and an action parameter; solving the dynamic equation, and obtaining q stable phases of the to-be-solved complex variable by changing a value of the control variable, where a value of q is determined by the multi-bifurcation parameter; and obtaining a solution to the combinatorial optimization problem based on the q stable phases. In this application, for solving the combinatorial optimization problem, a spin number can be reduced and time for finding a solution can be shortened.

FIG. 1

# EP 4 730 159 A1

## Description

This application claims priority to Chinese Patent Application No. 202310898465.2, filed with the China National Intellectual Property Administration on July 20, 2023 and entitled "METHOD, APPARATUS, AND SYSTEM FOR SOLVING COMBINATORIAL OPTIMIZATION PROBLEM", which is incorporated herein by reference in its entirety.

## TECHNICAL FIELD

This application relates to the field of artificial intelligence, and in particular, to a method for solving a combinatorial optimization problem, an apparatus, and a system.

## BACKGROUND

In the social life and industry, it is common to encounter a problem of finding an optimal combination in a large number of variables. Common problems include a traveling salesman problem and a minimum spanning tree. In the industry field, extremely large-scale integrated circuit design, drug design, a financial portfolio management problem, and the like are involved. These combinatorial optimization problems are often mathematically expressed as objective function minimization or maximization problems based on discrete variables.

A combinatorial optimization problem is a problem of finding optimal permutation or combination of specific things under given constraint conditions. A characteristic of the combinatorial optimization problem is that decision space of decision variables is a finite point set, and an optimal solution to the problem can be obtained by using an exhaustive method. However, exhaustive and enumeration methods are often not feasible. A number of feasible solutions increases exponentially with a scale of the problem. Each time a decision variable is added, a speed for finding a solution needs to be doubled. The traveling salesman problem is used as an example. The traveling salesman problem was first proposed by Dantzig et al. in 1959, and is a most fundamental shortest path problem. A traveling salesman is to travel to several cities, and distances between the cities are known. To reduce costs, the traveling salesman decides to start from the city at which the traveling salesman is located, travel to each city once, and return to the original city. Which route should the traveling salesman select to minimize a distance or costs? When a city number increases, complexity of the problem increases exponentially. For example, when there are 30 cities, it takes hundreds of thousands of years to use a currently fastest supercomputer to try all possible routes by using the exhaustive method. Alternatively, even though parallel computing with a cluster of hundreds of thousands of supercomputers can shorten time for finding a solution, energy and resource consumption is enormous, requiring substantial capital support from an application developer, and computing power of current computing devices cannot meet capital and benefit requirements. Therefore, a method for solving a combinatorial optimization problem, an apparatus, and a system need to be provided, to improve a speed and quality of solving the combinatorial optimization problem facing a large number of variables.

## SUMMARY

To resolve the foregoing problem, embodiments of this application provide a method for solving a combinatorial optimization problem, an apparatus, and a system, to solve the combinatorial optimization problem based on a multi-direction bifurcation quantum heuristic algorithm with phase encoding. In this way, when there are a large number of variables, a speed and quality of solving the combinatorial optimization problem can be improved, and energy and resource consumption can be reduced, to meet a computing power requirement and improve user satisfaction.

According to a first aspect, an embodiment of this application provides a method for solving a combinatorial optimization problem. The method includes: receiving a combinatorial optimization problem input by a user, where the combinatorial optimization problem refers to finding a solution in which permutation and combination of a plurality of things meet a requirement under a constraint condition given by the user; mapping the combinatorial optimization problem to a spin model, where the spin model includes a to-be-solved complex variable and an objective function, the to-be-solved complex variable is used to describe the solution in which the permutation and combination of the things meet the requirement as a discrete variable in a complex number field, and the objective function is used to describe the permutation and combination of the plurality of things under the given constraint condition; determining a dynamic equation for the to-be-solved complex variable in the complex number field, where the dynamic equation is used to describe a time-based evolution process of the to-be-solved complex variable, and the dynamic equation includes at least a control variable, a multi-bifurcation parameter, and an action parameter, where the control variable is used to control a bifurcation speed of the to-be-solved complex variable, the multi-bifurcation parameter is used to describe a number of phases of the to-be-solved complex variable, and the action parameter is used to describe interaction between to-be-solved complex variables; solving the dynamic equation, and obtaining q stable phases of the to-be-solved complex variable by changing a value of the control variable, where a value of q is determined by the multi-bifurcation parameter; and determining spin orientations of the spin model based on the q stable phases, to obtain a solution to the combinatorial optimization problem.

In this way, in this embodiment of this application, a problem abstracted from a combinatorial optimization problem in actual production and life is mapped to a Potts model, and a bifurcation parameter is determined based on an actual problem. After a control variable and a to-be-solved complex variable are initialized, the control variable drives the to-be-solved complex variable to bifurcate in a plurality of directions based on a dynamic equation, and phase angles of the complex variable are used as an output result, to solve the combinatorial optimization problem. The abstracted problem is mathematically expressed as an objective function minimization or maximization problem based on a discrete variable. The to-be-solved complex variable is driven by the control variable to bifurcate in the plurality of directions based on the dynamic equation, so that a speed and quality of solving the combinatorial optimization problem can be improved when there are a large number of variables, a number of spins for solving the problem is greatly reduced, a computing power requirement is lowered, and time for finding a solution is shortened.

In an implementable implementation, the dynamic equation further includes an external field term, and the external field term is used to describe an additional constraint condition.

In this way, in this embodiment of this application, in many application scenarios, for example, when resources or time windows are limited, an additional constraint condition may be added, and the external field term may be introduced, to solve the combinatorial optimization problem.

In an implementable implementation, the method further includes: determining the multi-bifurcation parameter based on the given constraint condition.

In this way, in this embodiment of this application, under the given constraint condition, a spatial dimension size of a solution to an actual problem may be controlled by using a multi-bifurcation parameter q, to implement an annealing mechanism for multi-bifurcation solving, and directly solve an XY model and a Potts model.

In an implementable implementation, the method further includes: determining a spatial dimension of the solution based on the multi-bifurcation parameter; or determining a number of bifurcations of the to-be-solved complex variable based on the multi-bifurcation parameter.

In this way, for solving a same problem, in comparison with an Ising model, in this embodiment of this application, a variable number is smaller, and a computation amount is less. During solving of a large-scale combinatorial optimization problem, an overall computation amount may be reduced exponentially.

In an implementable implementation, the method further includes: setting the control variable, including setting a value range and a control step of the control variable.

In this way, in this embodiment of this application, a multi-bifurcation speed may be controlled by using the control variable, and time-based evolutionary solving of the to-be-solved complex variable is implemented under a condition that the variable number is small and the computation amount is less.

In an implementable implementation, changing the value of the control variable includes: changing the value of the control variable based on the specified control step.

In this way, in this embodiment of this application, a speed and precision of solving a complex variable bifurcation may be adjusted and changed by changing the value of the control variable.

In an implementable implementation, a time parameter is included, and changing the value of the control variable includes: gradually changing the value of the control variable with an increase of the time parameter.

In this way, in this embodiment of this application, the value of the control variable may be changed by changing the time parameter, to increase the speed for solving the complex variable bifurcation.

In an implementable implementation, obtaining the q stable phases of the to-be-solved complex variable by changing the value of the control variable includes: when a number of bifurcations in a stable state is greater than q, changing the value of the control variable, to cause the to-be-solved complex variable to bifurcate from a single stable state into a plurality of stable phases, until a number of the stable phases is equal to q.

In this way, in this embodiment of this application, a solution to the combinatorial optimization problem can be obtained in the complex number field based on an amplitude of the complex variable and a stable state of a phase, to reduce a number of spins for solving the problem, lower a computing power requirement, and shorten time for finding a solution.

In an implementable implementation, the combinatorial optimization problem is a graph coloring problem, the constraint condition is K colors, and a solution in which each vertex is assigned with one color to avoid a case in which no two adjacent vertices have a same color is to be obtained under the constraint condition; and mapping the combinatorial optimization problem to the Potts model includes: determining that the Potts model for the graph coloring problem is:

$$\mathrm{CN} = \sum_{(uv)\in E} e_{uv}\,\delta\!\left(e^{i\theta_u}, e^{i\theta_v}\right)$$

where CN is a color conflict number; $n$ to-be-solved complex variables $e^{i\theta_v}$ are set; **v** and **u** represent vertices; a value of a

phase $\theta_v$ represents a color of the vertex $v$; $\delta(e^{i\theta u}, e^{i\theta v})$ is an objective function, and is used to compare whether colors of the two connected vertices $v$ and $u$ conflict; a value of a color number K is used as a multi-bifurcation parameter; and a connecting edge $e_{uv}$ between the vertex $u$ and the vertex $v$ is used as an interaction parameter, and $e_{uv}$ indicates whether the vertex $u$ and the vertex $v$ are connected.

In this way, according to the method for solving a combinatorial optimization problem provided in this embodiment of this application, during solving of a combinatorial optimization problem of large-scale graph coloring, a variable number of the combinatorial optimization problem can be greatly reduced, and an overall computation amount can be reduced by a factor of n*q. Combinatorial optimization problems of scenarios such as time table formulation, mobile radio frequency allocation, register allocation, and server scheduling can also be resolved.

In an implementable implementation, the combinatorial optimization problem is a traveling salesman problem, the constraint condition is m cities and a distance between each pair of cities, and a solution in which a loop of visiting each city once and returning to an origin city is shortest is to be obtained under the constraint condition; and mapping the combinatorial optimization problem to the Potts model includes: determining that the Potts model for the traveling salesman problem is:

$$D(x) = \sum_{(uv)\in E} w_{uv}\delta(e^{i\theta_u} \cdot e^{i2\pi/q}, e^{i\theta_v})$$

where D(x) is a distance of the shortest loop; m to-be-solved complex variables $|x|e^{i\theta_v}$ are set; v represents a city, and a phase $\theta_v$ represents a visiting ranking of the city v; $w_{uv}$ represents a distance between a city $u$ and the city $v$; $\theta(e^{i\theta u} \cdot e^{i2\pi/q}, e^{i\theta v})$ is an objective function, and is used to describe a next possible city to visit; $e^{i\theta u}$ represents the city $u$ that is first visited; $q$ is a multi-bifurcation parameter; $e^{i2\pi/q}$ is a ranking number of the visited city plus 1, and represents a next city to visit; when $e^{i\theta u} \cdot e^{i2\pi/q} = e^{i\theta v}$, the objective function $\delta = 1$, representing that the next city to visit is the city v; or when $e^{i\theta u} \cdot e^{i2\pi/q} \neq e^{i\theta v}$, the objective function $\delta = 0$, representing that the next city to visit is not the city v; and a city number m is used as a multi-bifurcation parameter.

In this way, in this embodiment of this application, during solving of a traveling salesman problem of large-scale combinatorial optimization, a variable number of the combinatorial optimization problem can be greatly reduced, and an overall computation amount can be reduced by a factor of $m^2$. The method for solving a combinatorial optimization problem provided in this embodiment of this application is used to solve the traveling salesman problem, and may be applied to many fields such as planning, logistics, chip manufacturing, and DNA sequencing. In these applications, a concept of "city" represents a customer, a welding point, or a DNA fragment, and a concept of "distance" represents travel time, travel costs, or a similarity measure between DNA fragments.

In an implementable implementation, the spin model includes a Potts model or an XY model.

In this way, the XY model and Potts model are directly solved without being converted into the Ising model. For solving a same problem, in comparison with the Ising model, in this embodiment of this application, the variable number is smaller, and the computation amount is less.

According to a second aspect, an embodiment of this application provides an electronic device, including: at least one memory, configured to store a program; and at least one processor, configured to execute the program stored in the memory. When the program stored in the memory is executed, the processor is configured to perform the method according to any implementation of the first aspect. A beneficial effect of the second aspect is the same as that of the first aspect. Details are not described herein again.

According to a third aspect, an embodiment of this application provides a computer storage medium. The computer storage medium stores instructions. When the instructions are run on a computer, the computer is caused to perform the method according to any implementation of the first aspect. A beneficial effect of the third aspect is the same as that of the first aspect. Details are not described herein again.

## BRIEF DESCRIPTION OF DRAWINGS

To describe technical solutions of a plurality of embodiments disclosed in the specification more clearly, the following briefly describes the accompanying drawings that need to be used in descriptions of embodiments. It is clear that the accompanying drawings in the following descriptions show merely the plurality of embodiments disclosed in the specification, and a person of ordinary skill in the art can still derive other drawings from these accompanying drawings without creative efforts.

The following briefly describes the accompanying drawings that need to be used in descriptions of embodiments or a conventional technology.

FIG. 1 is a flowchart of a method for solving a combinatorial optimization problem according to an embodiment of this application;

FIG. 2a is a diagram of phase bifurcation of a complex variable in a method for solving a combinatorial optimization problem according to an embodiment of this application;

FIG. 2b is a diagram of amplitude bifurcation of a complex variable in a method for solving a combinatorial optimization problem according to an embodiment of this application;

FIG. 3 is an algorithm flowchart of a method for solving a combinatorial optimization problem according to Embodiment 1 of this application;

FIG. 4a is a diagram of a graph coloring problem according to Embodiment 2 of this application;

FIG. 4b is a flowchart of solving a graph coloring problem according to Embodiment 2 of this application;

FIG. 5a is a diagram of a traveling salesman problem according to Embodiment 3 of this application;

FIG. 5b is a flowchart of solving a traveling salesman problem according to Embodiment 3 of this application;

FIG. 6 is a diagram of an apparatus for solving a combinatorial optimization problem according to an embodiment of this application; and

FIG. 7 is a diagram of an electronic device according to an embodiment of this application.

## DESCRIPTION OF EMBODIMENTS

In descriptions of embodiments of this application, words such as "exemplary", "in an example", or "for example" are used to represent an example, an illustration, or a description. Any embodiment or design scheme described as "exemplary", "in an example", or "for example" in embodiments of this application should not be interpreted as being more preferred or advantageous than another embodiment or design scheme. Specifically, the use of the words such as "exemplary", "in an example", or "for example" is intended to present related concepts in a specific manner.

In the descriptions of embodiments of this application, a term "and/or" is merely an association relationship for describing associated objects, and indicates that three relationships may exist. For example, A and/or B may indicate: only A exists, only B exists, and both A and B exist. In addition, unless otherwise specified, a term "a plurality of" means two or more. For example, a plurality of systems means two or more systems, and a plurality of terminals means two or more terminals.

In addition, terms "first" and "second" are merely used for a description purpose, and shall not be understood as indicating or implying relative importance or implicitly including indicated technical features. Therefore, a feature limited by "first" or "second" may explicitly or implicitly include one or more features. Terms "include", "comprise", "have", and their variants all mean "include but are not limited to", unless otherwise specifically emphasized in another manner.

In the descriptions of embodiments of this application, a term "some embodiments" describes subsets of all possible embodiments, but it may be understood that "some embodiments" may be the same subsets or different subsets of all possible embodiments, and may be combined with each other without a conflict.

In the descriptions of embodiments of this application, a term "first, second, third, or the like", or a module A, a module B, a module C, or the like is merely used to distinguish between similar objects, and do not represent a specific sequence of the objects. It may be understood that a specific sequence or priority may be interchanged if allowed, so that embodiments of this application described herein may be implemented in a sequence other than the sequence illustrated or described herein.

In the descriptions of embodiments of this application, related reference numerals such as S110 and S120 that indicate steps do not necessarily indicate that the steps are to be performed based on the order, and consecutive steps may be exchanged if allowed, or may be performed simultaneously.

Unless otherwise defined, all technical and scientific terms used in this specification have same meanings as those usually understood by a person skilled in the art of this application. The terms used in this specification are merely intended to describe embodiments of this application, and are not intended to limit this application.

Related terms in embodiments of this application include the following.

Polynomial (polynomial, P) problem is a problem that can be solved by a deterministic machine (a computer in a general sense) in polynomial time.

Polynomial time indicates that time (complexity) needed for the problem is polynomially related to a scale of the problem.

Non-deterministic polynomial (non-deterministic polynomial, NP) problem is a problem that can be solved by a non-deterministic machine in the polynomial time.

An Ising model (Ising model) is used to describe ferromagnetism of a substance. The model includes a parameter that can be used to describe a single atomic magnetic moment, where the parameter of the single atomic magnetic moment is +1 or -1, respectively representing an up spin or a down spin. These magnetic moments are usually arranged according to a specific rule to form a lattice, and a specific interaction parameter is introduced into the model. In this case, adjacent spins affect each other.

To make objectives, technical solutions, and advantages of embodiments of this application clearer, the following describes the technical solutions in embodiments of this application with reference to the accompanying drawings.

Scientists propose a spin model (spin model) in the research on properties of a magnetic substance, and gradually find that many combinatorial optimization problems may be mapped to the spin model. Currently, the spin model has been widely used in the field of combinatorial optimization. This brings some new solving schemes to a combinatorial optimization problem.

The spin model is a mathematical model mainly used to explain magnetism in physics. Because a spin state of the spin model in a lowest energy state may be directly mapped to a solution to a combinatorial optimization problem, a solver designed to find a ground state of the spin model has attracted wide attention.

In an earliest proposed Ising model, a spin orientation can only be upward or downward. A Hamiltonian expression of the system is as follows:

$$H(\sigma) = -\sum_{ij} J_{ij}\sigma_i\sigma_j - \sum_j h_j\sigma_j \qquad (1)$$

In formula (1), $\sigma_i$ and $\sigma_j$ represent spin orientations, and respectively represent two opposite directions, for example, upward and downward; $J_{ij}$ represents interaction between spins; and $h_j$ represents an external field.

A Hamiltonian expression of an XY model is as follows:

$$H(s) = -\sum_{ij} J_{ij}s_i \cdot s_j - \sum_j h_j \cdot s_j = -\sum_{ij} J_{ij}\cos(\theta_i - \theta_j) - \sum_j h_j\cos\theta_j \qquad (2)$$

In formula (2), $s_i$ represents a spin orientation, and may take continuous values in a two-dimensional plane, $J_{ij}$ represents interaction between spins, and $h_j$ represents an external field.

A Potts model (Potts model) is a generalization of the Ising model, and the Potts model is a model of spins whose interaction is on a lattice. A spin orientation of the Potts model takes discrete values in the two-dimensional plane.

In formula (2), $\theta_i = i * 2\pi n/q$, where $\theta_i$ is a phase of an $i^{th}$ spin; and $\theta_j = j * 2\pi n/q$, where $\theta_j$ is a phase of a $j^{th}$ spin; and a phase of a spin may take discrete values in the two-dimensional plane, $J_{ij}$ represents interaction between two spins, and $h_j$ represents an external field.

The Potts model has more states than the Ising model, can represent more information, and can solve a combinatorial optimization problem with fewer spins.

Scheme 1 for solving the Ising model is to use a simulated bifurcation algorithm, and drive, by changing a control variable $\mu$, a continuous variable $x$ to randomly transition from a single stable state to one of two stable states. A positive or negative symbol of the variable x after bifurcation is used as the spin orientation, and a continuous variable is transitioned into a discrete variable. A plurality of continuous variables affect each other through interaction $J_{ij}$ in a bifurcation process and are separately transitioned into stable states 1 and 2. A combination of positive and negative symbols of the plurality of continuous variables is a solution to the Ising model. A Hamiltonian expression of the Ising model is as follows:

$$f(x) = -\sum_{ij} J_{ij}x_ix_j - \sum_j h_jx_j \qquad (3)$$

In formula (3), x is a continuous variable, $x_i$ represents a spin, and $x_j$ represents another spin.

In scheme 1, an optimal solution to the Ising model shown in formula (3) is obtained, based on a bifurcation phenomenon, by calculating a dynamic equation for the variable x. The dynamic equation for the variable x is as follows:

$$\frac{dx_i}{dt} = (\mu - x_i^2)x_i + \eta\sum_j J_{ij}\tilde{x}_j \qquad (4)$$

In formula (5), $\mu$ is a control variable, and is used to change a bifurcation speed; $J_{ij}$ represents interaction between two spins $x_i$ and $x_j$; and $\eta$ is a first factor.

The simulated bifurcation algorithm is used to implement transition of the continuous variables from one stable state to two stable states, and may be used to solve an Ising model whose spin orientations have only two directions. However, a spin number and a computation amount that are needed by an XY model that continuously changes in the two-dimensional plane or a Potts model whose spin directions are a plurality of discrete directions in the two-dimensional plane increase exponentially and dramatically. In this case, scheme 1 cannot meet a computing power requirement.

An apparatus for solving a combinatorial optimization problem provided in an embodiment of this application is configured to map, to a Potts model, a problem abstracted from a combinatorial optimization problem in actual production and life, and find an optimal solution. The combinatorial optimization problem relates to the fields such as extremely large-scale integrated circuit design, drug design, and financial portfolio management. The abstracted problem includes a maximum k-cut problem, a graph segmentation problem, a graph coloring problem, an N-queens problem, and a traveling salesman problem. These abstracted problems are often mathematically expressed as objective function minimization or maximization problems based on discrete variables.

For the objective function minimization or maximization problems based on the discrete variables, an embodiment of this application provides a method for solving a combinatorial optimization problem. A Potts model is solved by using a multi-direction bifurcation heuristic algorithm with phase encoding, so that a number of spins needed for solving a large-scale combinatorial optimization problem can be greatly reduced, a computing power requirement can be lowered, and time for finding a solution can be shortened.

In this embodiment of this application, a bifurcation parameter is determined based on an actual problem, after a control variable and a to-be-solved complex variable are initialized, the control variable drives the to-be-solved complex variable to bifurcate in a plurality of directions according to a dynamic equation, and phase angles of the complex variable are used as an output result.

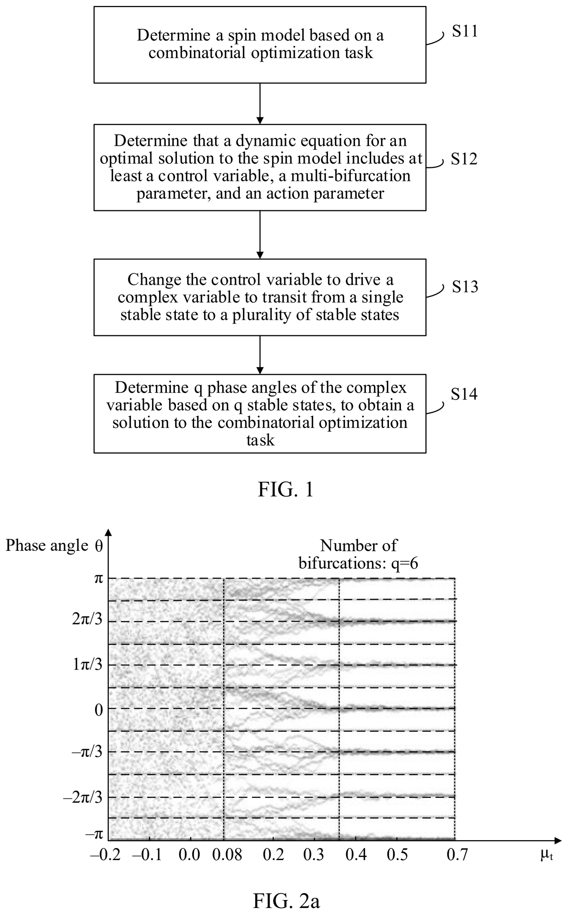

FIG. 1 is a flowchart of a method for solving a combinatorial optimization problem according to an embodiment of this application. As shown in FIG. 1, the following steps are included.

S11: Determine a spin model based on a combinatorial optimization problem. The spin model is a Potts model based on multi-direction bifurcation of a complex variable, and a Hamiltonian form of the Potts model is as follows:

$$f(x) = -\sum_{ij} J_{ij} x_i \cdot x_j - \sum_j h_j x_j \qquad (5)$$

In some embodiments, when an effect of an external field is not considered, an external field term $\sum_j h_j x_j = 0$.

In some embodiments, the spin model may be an XY model based on the multi-directional bifurcation of the complex variable.

S12: Determine a dynamic equation for an optimal solution to the spin model, where the dynamic equation includes a multi-bifurcation parameter q; and initialize a control variable $\mu$ of a bifurcation speed and a to-be-solved complex variable x. The dynamic equation describes a time-based evolution process of the to-be-solved complex variable $x_i$, and is as follows:

$$\frac{dx_i}{dt} = (\mu - |x_i|^2 + r x_i^q) x_i + \eta \sum_{j=1}^N J_{ij} x_j \qquad (6)$$

or

$$\frac{dx_i}{dt} = (\mu - |x_i|^2 + r(x_i^*)^q) x_i + \eta \sum_{j=1}^N J_{ij} x_j \qquad (7)$$

$x_i = |x_i| e^{i\theta_i}$ is the complex variable, $x_i^*$ is a conjugate of $x_i$, q is the multi-bifurcation parameter, $\eta$ is a first factor, r is a second factor, and values of $\eta$ and r are separately determined or adjusted based on experience.

One complex variable $x_i$ is set to represent one spin, and the dynamic equation for the to-be-solved complex variable in a complex number field is solved. Dynamic equation formula (6) or formula (7) includes a bifurcation term and a complex variable interaction term, and may further include the external field term $\sum_j h_j x_j$ in some scenarios. The bifurcation term includes the control variable $\mu$ of the bifurcation speed and a variable q for controlling a number of bifurcations; and the interaction term is $J_{ij}$.

S13: Change the control variable $\mu$ to drive the complex variable $x_i$ to transit from a single stable state to a plurality of stable states.

In some implementations, a value of the control variable $\mu$ may be changed with a time parameter t, to change a speed at which the to-be-solved complex variable $x_i$ bifurcates in a plurality of directions.

For example, the value of the control variable $\mu$ may be gradually increased with the time parameter t, to increase the speed at which the to-be-solved complex variable $x_i$ bifurcates in the plurality of directions. The complex variable $x_i$ is a discrete variable. In a bifurcation process, a plurality of complex variables $x_i$ affect each other through interaction $J_{ij}$ and are separately transitioned into a plurality of stable states. Phases of the complex variable after bifurcation are used as spin orientations.

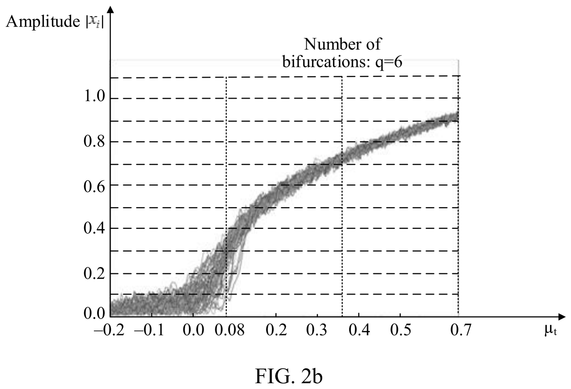

FIG. 2a is a diagram of phase bifurcation of a complex variable. FIG. 2b is a diagram of amplitude bifurcation of a complex variable. As shown in FIG. 2a and FIG. 2b, $\mu_t$ = -0.2, -0.1,0.0,0.08, ...,0.7 corresponds to a change of a time parameter t = 0,1,2,3, ..., N. When a control variable $\mu_t$ reaches a specific value at a specific moment, for example, when t = 3 and $\mu_3$ = 0.08, an amplitude of a complex variable $x_i$ is changed from 0 to 0.3, and a phase bifurcates from a single direction to a plurality of directions. In a bifurcation process, an interaction parameter of mutual effects between a plurality of complex variables is $J_{ij}$. When the control variable $\mu_t$ reaches a specific value like 0.36, the complex variable $x_i$ starts to bifurcate in six directions. When the control variable $\mu_t$ reaches 0.7, an amplitude of each complex variable $x_i$ approaches a

stable value like 0.9, and the complex variable bifurcates into six stable states.

S14: Determine q phases of the complex variable based on q stable states, and determine the spin orientations of the spin model based on the q stable phases, to obtain a solution to the combinatorial optimization problem.

For example, a number of stable bifurcations of the complex variable $x_i$ is 6, where the stable bifurcations correspond to six stable phases 0; and six spin orientations of the spin model are determined based on the six stable phases.

In this embodiment of this application, a combination of a plurality of phase angles $\theta_i$ corresponding to the complex variable $x_i$ is a solution to the Potts model.

Embodiment 1

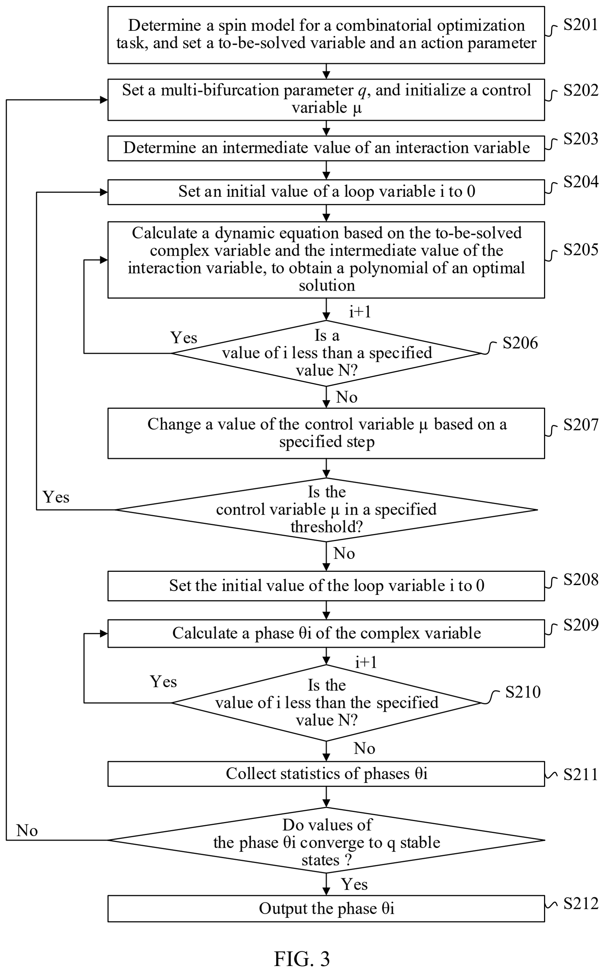

FIG. 3 is an algorithm flowchart of solving a combinatorial optimization problem according to Embodiment 1 of this application. As shown in FIG. 3, an implementation process of each step is described in detail with reference to the algorithm flowchart. The steps are as follows.

S201: When an external field term $\sum_j h_j x_j = 0$, determine a spin model for a combinatorial optimization problem based on an actual problem, and set a to-be-solved variable $x_i$ and an action parameter $J_{ij}$.

$$f(x) = -\sum_{ij} J_{ij} x_i \cdot x_j \qquad (8)$$

S202: Set a multi-bifurcation parameter q, and initialize a control variable $\mu$.

The multi-bifurcation parameter is used to describe a spatial dimension of a solution and/or a number of bifurcations of a spin orientation, and the multi-bifurcation parameter may be determined based on a given constraint condition.

For example, in an actual traveling salesman problem, when 30 cities are to be visited, the multi-bifurcation parameter q is set to 30, the control variable $\mu$ is initialized, an initial value of $\mu$ may be set, and the to-be-solved variable $x_i$ is a shortest route for visiting the 30 cities.

In some implementations, the control variable $\mu$ is set, where the setting includes setting a control step and a value range of $\mu$.

In some implementations, a value of the control variable $\mu$ may be changed with an increase of a time parameter t, and the value of the control variable $\mu$ is set to a sequence of natural numbers. As shown in $\mu_t$ = -0.2, -0.1, 0.0, 0.08, ..., 0.7 in FIG. 2a or FIG. 2b, the initial value of $\mu$ is $\mu_0$, and a value of t is increased by 1 each time.

In some implementations, values of the control variable $\mu_t$ in a currently specified range are traversed. If no solution that meets a requirement is obtained, the control step and the value range of the control variable $\mu$ are reset.

S203: Determine an intermediate value $f_i$ of an interaction variable.

In some implementations, the intermediate value $f_i$ of the interaction variable may be calculated based on an intermediate value $x_j$ of the to-be-solved complex variable and an interaction matrix $J_{ij}$:

$$f_i = \eta \sum_{j=1}^{N} J_{ij} x_j \qquad (9)$$

S204: Set an initial value of a loop variable i to 0.

S205: Calculate a dynamic equation (6) or (7) based on the to-be-solved complex variable $x_i$ and the intermediate value $f_i$ of the interaction variable, to obtain a polynomial of an optimal solution:

$$x_i = \alpha x_i + \left(\mu - |x_i|^2 + r x_i^q\right) x_i + \eta \sum_{j=1}^{N} J_{ij} x_j \qquad (10)$$

In formula (10), $\alpha$ is a third factor, and values of $\alpha$, $r$, and $\eta$ are separately determined or adjusted based on experience.

S206: Increase a value of i by 1; and when the value of i is less than a specified value N, return to step S205; or when the value of i is equal to a specified value N, terminate the loop, and perform S207. Values of i and j are positive integers.

S207: Change the value of the control variable $\mu$ based on the specified step, and when the value of the control variable $\mu$ is less than or equal to a specified threshold, return to step S204; or when the value of the control variable $\mu$ exceeds a specified threshold, terminate the loop, and perform S208.

S208: Set the initial value of the loop variable i to 0.

S209: Calculate a phase $\theta_i$ of the complex variable $x_i$:

$$\theta_i = angle(x_i) \qquad\qquad (11)$$

S210: Increase the value of i by 1; and when the value of i is less than the specified value N, return to step S209; or when the value of i is greater than or equal to the specified value N, terminate the loop, and perform S211.

S211: Collect statistics of the phase $\theta_i$, and determine whether values of the phase $\theta_i$ converge to q stable states.

When the values of the phase $\theta_i$ are in stable numerical ranges and a number of the stable numerical ranges converges to the specified multi-bifurcation parameter $q$, the process ends, the phases $\theta_i$ are used as a solution result, and S212 is performed. On the contrary, when the values of the phase $\theta_i$ are unstable and a number of numerical ranges to which the values belong is greater than the specified multi-bifurcation parameter q, step S202 is performed again, to be specific, the control step and the value range of the control variable $\mu$ are reset.

S212: Output the values of the phase $\theta_i$.

In Embodiment 1 of this application, the multi-bifurcation parameter q is a variable that controls a spatial dimension size of a solution to an actual problem. In comparison with the conventional technology in which a variable can only be bifurcated in two directions in a solving process, in this embodiment of this application, an annealing mechanism for multi-bifurcation solving can be implemented, and an XY model and a Potts model can be directly solved without being converted into an Ising model.

For solving a same problem, in comparison with the Ising model, in this application, a variable number is smaller, and a computation amount is less. During solving of a large-scale combinatorial optimization problem in this embodiment of this application, an overall computation amount may be reduced exponentially.

In Embodiment 1 of this application, based on a multi-bifurcation encoding scheme, an objective of searching for an optimal solution to a specific problem can be achieved, and precision can be ensured.

In Embodiment 1 of this application, the annealing mechanism for multi-bifurcation solving may be implemented, and a number of spin directions is determined by the multi-bifurcation parameter. Therefore, in Embodiment 1 of this application, the XY model and the Potts model may be directly solved.

Many combinatorial optimization problems, including a maximum k-cut problem, a graph coloring problem, an N-queens problem, a traveling salesman problem, and the like, may be solved by using the algorithm in Embodiment 1 of this application. The following uses the graph coloring problem and the traveling salesman problem as examples.

Embodiment 2

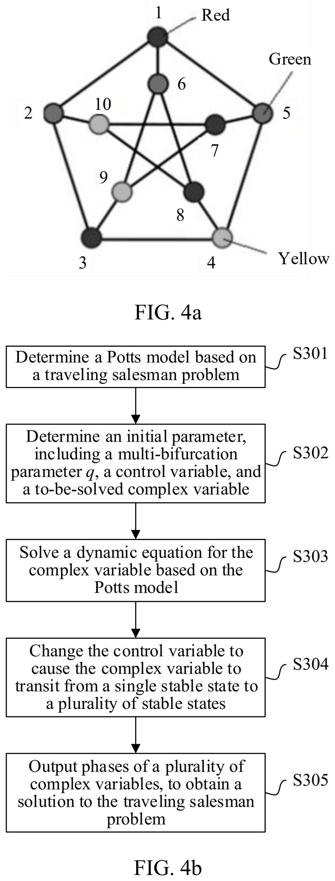

FIG. 4a is a diagram of a graph coloring problem according to Embodiment 2 of this application. As shown in FIG. 4a, the graph coloring problem is an NP problem. A user inputs a given undirected graph G=(V, E), where V is a vertex, and E is an edge connecting two vertices. A computing apparatus in this application is used to solve whether one of K colors can be assigned to each vertex to avoid a case in which no two adjacent vertices have a same color. Having two adjacent vertices with a same color is considered a conflict (conflict).

FIG. 4b is a flowchart of solving a graph coloring problem according to Embodiment 2 of this application. As shown in FIG. 4b, for the graph coloring problem, a method for solving a combinatorial optimization problem is provided in Embodiment 2 of this application and includes the following steps.

S301: Determine a spin model based on the graph coloring problem, where the spin model is a Potts model based on multi-direction bifurcation of a complex variable, and a Hamiltonian form of the Potts model is as follows:

$$CN = \sum_{(uv)\in E} e_{uv}\delta\left(e^{i\theta_u}, e^{i\theta_v}\right) \qquad\qquad (12)$$

CN is a color conflict number (conflict number, CN), an effect of an external field is not considered, and an external field term $\sum_j h_j x_j = 0$.

In Embodiment 2 of this application, based on the undirected graph G=(V, E), the computing apparatus obtains a value of a vertex number V of in the undirected graph G, and uses the value as a number n of complex variables (or spins). In this case, n=V. $n$ to-be-solved complex variables $e^{i\theta_v}$ are set, where v represents a vertex, and a value of a phase $\theta_v$ represents a color of the vertex v. $e_{uv}$ indicates whether a vertex u is connected to the vertex v. If the vertex $u$ is connected to the vertex v, $e_{uv} = 1$; or if the vertex $u$ is not connected to the vertex v, $e_{uv} = 0$.

$\delta(e^{i\theta_u}, e^{i\theta_v})$ is used to compare whether colors of the two connected vertices v and u conflict. Specifically, whether phase angles $\theta_v$ and $\theta_u$ are the same is compared. If the phase angles $\theta_v$ and $\theta_u$ are the same, colors of the vertices v and u are the same, which is considered a conflict, and $\delta=1$; or if the phase angles $\theta_v$ and $\theta_u$ are different, colors of the vertices v and u meet a coloring requirement, and $\delta=0$.

For example, as shown in FIG. 4a, there are vertices 1 to 10. In this case, n=10. The 10 to-be-colored vertices are respectively to-be-solved complex variables $e^{i\theta_1}$, $e^{i\theta_2}$, ..., and $e^{i\theta_{10}}$. $e_{12}$ is an edge connecting the vertex 1 and the vertex 2, and $e_{12} = 1$. The vertex 1 is not connected to the vertex 3. In this case, $e_{13} = 0$. If the vertex 1 is red, and the vertex 5 is green,

$\delta(e^{i\theta_1}, e^{i\theta_5}) = 0$.

Further, if *CN=0,* the Potts model that represents formula (12) has a solution. In this case, each of the 10 vertices may be assigned with one of three colors to avoid a case in which no two connected vertices have a same color.

S302: Determine an initial parameter, including a multi-bifurcation parameter *q*, a control variable $\mu$, and a to-be-solved complex variable.

A value of a color number K of is set to the multi-bifurcation parameter q. In this case, q = K. As shown in FIG. 4a, if the color number K is 3, and the three colors are: K1 red, K2 green, and K3 yellow, the multi-bifurcation parameter q = 3.

When a connecting edge $e_{uv}$ between the vertex u and the vertex v is set as an interaction parameter, $J_{ij} = e_{uv}$. A complex variable $x_v$ represents a spin $e^{i\theta v}$, and a complex variable $x_u$ represents another spin $e^{i\theta u}$.

An initial value of the control variable $\mu$ may be selected based on experience. For example, a bifurcation critical point may be calculated based on a dynamic equation, and it is set that the initial value of the control variable $\mu$ is less than the bifurcation critical point.

S303: Solve the dynamic equation for the complex variable according to formula (12) for the spin model.

The dynamic equation calculated according to formula (12) is as follows:

$$\frac{dx_v}{dt} = (\mu - |x_v|^2 + r(x_v)^q)x_v + \eta \sum_{j=1}^{N} \boldsymbol{e_{uv}} x_{\boldsymbol{u}} \qquad (13)$$

or

$$\frac{dx_v}{dt} = (\mu - |x_v|^2 + r(x_v^*)^q)x_v + \eta \sum_{j=1}^{N} \boldsymbol{e_{uv}} x_{\boldsymbol{u}} \qquad (14)$$

S304: Change the control variable $\mu$ to cause the complex variable $x_v$ to transit from a single stable state to a plurality of stable states. For a specific implementation, refer to step S202 to step S212 in Embodiment 1. Details are not described herein again.

For example, for graph coloring shown in FIG. 4a, the control variable $\mu$ is changed to cause the complex variable $x_v$ to transit from a single stable state to three stable states, and phases corresponding to the three stable states are: 0, $2\pi/3$, and $-2\pi/3$.

S305: Output phases $\theta_i$ of a plurality of complex variables $x_i$, where a combination of the phases corresponding to the plurality of complex variables $x_i$ is a solution to the Potts model.

For example, for the graph coloring shown in FIG. 4a, the phases $\theta_i$ of the plurality of complex variables $x_i$ are output, and colors of corresponding vertices are determined based on values of output phase angles of the complex variables.

In Embodiment 2 of this application, during solving of a combinatorial optimization problem of large-scale graph coloring, a variable number of the combinatorial optimization problem can be greatly reduced, and an overall computation amount can be reduced by a factor of n*q.

The method for solving a combinatorial optimization problem provided in this embodiment of this application may be applied to scenarios such as time table formulation, mobile radio frequency allocation, register allocation, and server scheduling.

Embodiment 3

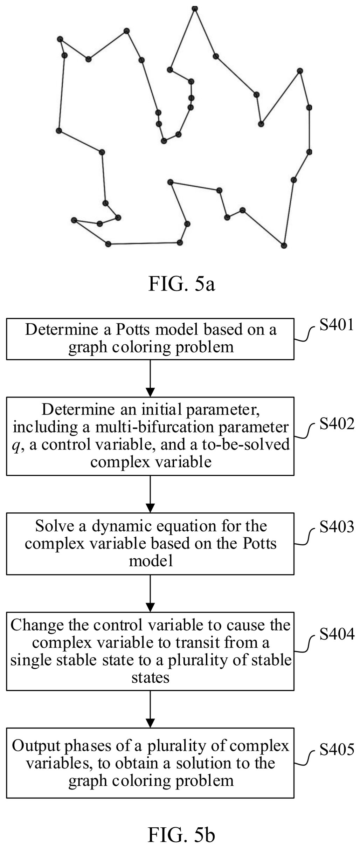

FIG. 5a is a diagram of a traveling salesman problem according to Embodiment 3 of this application. As shown in FIG. 5a, the traveling salesman problem is an NP-hard problem of combinatorial optimization. Given a series of m cities and a distance between each pair of cities, a shortest loop of visiting each city once and returning to an origin city is solved.

FIG. 5b is a flowchart of solving a traveling salesman problem according to Embodiment 3 of this application. As shown in FIG. 5b, for the traveling salesman problem, a method for solving a combinatorial optimization problem is provided in Embodiment 3 of this application and includes the following steps.

S401: Determine a spin model based on the traveling salesman problem, where the spin model is a Potts model based on multi-direction bifurcation of a complex variable, and a Hamiltonian form of the Potts model is as follows:

$$D(x_v) = \sum_{(uv) \in E} w_{uv} \delta(e^{i\theta_u} \cdot e^{i2\pi/q}, e^{i\theta_v}) \qquad (15)$$

$D(x_v)$ is a distance that needs to be minimized, an effect of an external field is not considered, and an external field term $\sum_j h_j x_j = 0$.

In Embodiment 3 of this application, a computing apparatus obtains the m cities and the distance between each pair of cities that are provided by a user, where a value of m is used as a number of complex variables (or spins), v represents a city, a phase $\theta_v$ represents a visiting ranking of the city v, and $w_{uv}$ represents a distance between a city u and the city v.

$\delta(,)$ is used to describe a next possible city to visit; $e^{i\theta_u}$ represents the city u that is first visited; q is a multi-bifurcation parameter; $e^{i2\pi/q}$ is a ranking number of the visited city plus 1, and represents a next city to visit; and when $e^{i\theta_u} \cdot e^{i2\pi/q} = e^{i\theta_v}$, $\delta = 1$, representing that the next city to visit is the city v; or when $e^{i\theta_u} \cdot e^{i2\pi/q} \neq e^{i\theta_v}$, $\delta = 0$, representing that the next city to visit is not the city v. A value of $D(x_v)$ is calculated to obtain a visiting sequence in which each city is visited once and the origin city is returned to while the value of $D(x_v)$ is a smallest value.

S402: Determine an initial parameter, including a multi-bifurcation parameter, a control variable $\mu$, and a to-be-solved complex variable.

A city number m is set to a number of complex variables (or spins), the city number m is used as the multi-bifurcation parameter q, and the distance between cities $w_{uv}$ is used as interaction. A complex variable $x_v$ is set to represent a spin $|x_v|e^{i\theta_v}$, where $|x_v|$ is an amplitude of the complex variable $x_v$, and the amplitude increases in an evolution process.

A complex variable $x_u$ represents another spin $|x_u|e^{i\theta_u}$, and an initial value of the control variable $\mu$ is set.

For example, as shown in FIG. 5a, the city number m = 35, and each city is visited once and the origin city is returned to. In this case, the multi-bifurcation parameter q = 35.

S403: Calculate a dynamic equation according to formula (15) and obtain a solution where $D(r)$ is a smallest value.

The dynamic equation calculated according to formula (15) is as follows:

$$\frac{dx_v}{dt} = \left(u - |x_v|^2 + rx_v{}^q\right)x_v + \eta \sum_{j=1}^{N} w_{uv}x_u$$

or

$$\frac{dx_v}{dt} = (u - |x_v|^2 + r(x_v^*)^q)x_v + \eta \sum_{j=1}^{N} w_{uv}x_u$$

S404: Change the control variable $\mu$ to cause the complex variable $x_v$ to transit from a single stable state to a plurality of stable states. For a specific implementation, refer to step S202 to step S212 in Embodiment 1. Details are not described herein again.

S405: Output phases $\theta_i$ of a plurality of complex variables $x_i$, where a combination of the phases $\theta_i$ corresponding to the plurality of complex variables $x_i$ is a solution to the Potts model. A visiting sequence of cities is obtained based on values of phase angles of the complex variables.

In Embodiment 3 of this application, during solving of a traveling salesman problem of large-scale combinatorial optimization, a variable number of the combinatorial optimization problem can be greatly reduced, and an overall computation amount can be reduced by a factor of $m^2$.

The method for solving a combinatorial optimization problem provided in Embodiment 3 of this application is used to solve the traveling salesman problem, and may be applied to many fields such as planning, logistics, chip manufacturing, and DNA sequencing. In these applications, a concept of "city" represents a customer, a welding point, or a DNA fragment, and a concept of "distance" represents travel time, travel costs, or a similarity measure between DNA fragments.

In many application scenarios, for example, when resources or time windows are limited, an additional constraint condition may need to be added, and an external field term may be introduced.

The method for solving a combinatorial optimization problem provided in this embodiment of this application is a multi-bifurcation solving process simulated in a classic computer, and the whole multi-bifurcation solving process is completed in a complex number field. The multi-directional bifurcation parameter q is a variable that controls a number of bifurcations of the to-be-solved variable, and a value of q may be selected. Phases of the complex variables are output as a solution to the problem.

The method for solving a combinatorial optimization problem provided in this embodiment of this application is based on a multi-bifurcation encoding scheme, an objective of searching for an optimal solution to a specific problem can be achieved, and precision can be ensured.

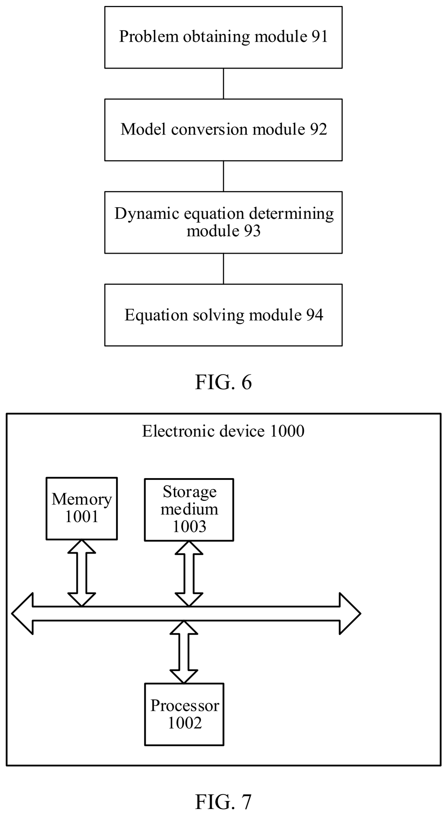

FIG. 6 is a diagram of an apparatus for solving a combinatorial optimization problem according to an embodiment of this application. As shown in FIG. 6, the apparatus includes: A problem obtaining module 91 receives a combinatorial optimization problem input by a user, where the combinatorial optimization problem refers to finding a solution in which permutation and combination of a plurality of things meet a requirement under a constraint condition given by the user. A model conversion module 92 maps the combinatorial optimization problem to a Potts model, where the Potts model includes a to-be-solved complex variable and an objective function, the to-be-solved complex variable is used to describe the solution to the permutation and combination of things as a discrete variable in a complex number field, and the objective function is used to describe the permutation and combination of the plurality of things under the given constraint condition. A dynamic equation determining module 93 determines a dynamic equation for the Potts model in the complex number field, where the dynamic equation is used to describe a time-based evolution process of the to-be-solved complex variable, and the dynamic equation includes at least a control variable, a multi-bifurcation parameter, and an action parameter, where the control variable is used to control a bifurcation speed of a spin orientation of the to-be-solved complex variable, the multi-bifurcation parameter is used to describe a spatial dimension and/or a number of spin orientations that are of the solution, and the action parameter is used to describe interaction between two spin orientations of the to-be-solved complex variable. An equation solving module 94 solves the dynamic equation, and obtains q stable spin orientations of the to-be-solved complex variable by changing a value of the control variable, where a value of q is determined by the multi-bifurcation parameter. q phase angles of the to-be-solved complex variable are determined by using the q stable spin orientations, to obtain a solution to the combinatorial optimization problem.

FIG. 7 is a diagram of an electronic device according to an embodiment of this application. As shown in FIG. 7, the electronic device 1000 includes: at least one memory 1001, configured to store a program; and at least one processor 1002, configured to execute the program stored in the memory 1001. When the program stored in the memory is executed, the processor 1002 is configured to perform the method for solving a combinatorial optimization problem according to any one of the foregoing embodiments.

An embodiment of this application provides a computer storage medium 1003, and the computer storage medium stores instructions. When the instructions are run on a computer, the computer is caused to perform the exception detection method according to any one of the foregoing implementations.

It may be understood that a processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for solving a combinatorial optimization problem, wherein the method comprises:

   receiving a combinatorial optimization problem input by a user, wherein the combinatorial optimization problem refers to finding a solution in which permutation and combination of a plurality of things meet a requirement under a constraint condition given by the user;
   mapping the combinatorial optimization problem to a spin model, wherein the spin model comprises a to-be-solved complex variable and an objective function, the to-be-solved complex variable is used to describe the solution in which the permutation and combination of the things meet the requirement as a discrete variable in a complex number field, and the objective function is used to describe the permutation and combination of the plurality of things under the given constraint condition;
   determining a dynamic equation for the to-be-solved complex variable in the complex number field, wherein the dynamic equation is used to describe a time-based evolution process of the to-be-solved complex variable, and the dynamic equation comprises at least a control variable, a multi-bifurcation parameter, and an action parameter, wherein the control variable is used to control a bifurcation speed of the to-be-solved complex variable, the multi-bifurcation parameter is used to describe a number of phases of the to-be-solved complex variable, and the action parameter is used to describe interaction between to-be-solved complex variables;
   solving the dynamic equation, and obtaining q stable phases of the to-be-solved complex variable by changing a value of the control variable, wherein a value of q is determined by the multi-bifurcation parameter; and
   determining spin orientations of the spin model based on the q stable phases, to obtain a solution to the combinatorial optimization problem.

2. The method according to claim 1, wherein the dynamic equation further comprises an external field term, and the external field term is used to describe an additional constraint condition.

3. The method according to claim 1 or 2, wherein the method further comprises:
   determining the multi-bifurcation parameter based on the given constraint condition.

4. The method according to any one of claims 1 to 4, wherein the method further comprises:

   determining a spatial dimension of the solution based on the multi-bifurcation parameter; or
   determining a number of bifurcations of the to-be-solved complex variable based on the multi-bifurcation parameter.

5. The method according to any one of claims 1 to 4, wherein the method further comprises:
   setting the control variable, comprising setting a value range and a control step of the control variable.

6. The method according to any one of claims 1 to 5, wherein changing the value of the control variable comprises:
   changing the value of the control variable based on the specified control step.

7. The method according to any one of claims 1 to 6, comprising a time parameter, and changing the value of the control variable comprises:
   gradually changing the value of the control variable with an increase of the time parameter.

8. The method according to any one of claims 1 to 7, wherein obtaining the q stable phases of the to-be-solved complex variable by changing the value of the control variable comprises:
   when a number of bifurcations in the stable state is greater than q, changing the value of the control variable, to cause the to-be-solved complex variable to bifurcate from a single stable state into a plurality of stable phases, until a number of the stable phases is equal to q.

9. The method according to any one of claims 1 to 8, wherein the combinatorial optimization problem is a graph coloring problem, the constraint condition is K colors, and a solution in which each vertex is assigned with one color to avoid a case in which no two adjacent vertices have a same color is to be obtained under the constraint condition; and mapping the combinatorial optimization problem to a Potts model comprises:

determining that the Potts model for the graph coloring problem is:

$$CN = \sum_{(uv) \in E} e_{uv} \delta\left(e^{i\theta_u}, e^{i\theta_v}\right)$$

wherein CN is a color conflict number; $n$ to-be-solved complex variables $\boldsymbol{e^{i\theta_v}}$ are set; $v$ and u represent vertices; a value of a phase $\theta_v$ represents a color of the vertex $v$; $\delta(,e^{i\theta_u}, e^{i\theta_v})$ is an objective function, and is used to compare whether colors of the two connected vertices v and **u** conflict; a value of a color number K is used as a multi-bifurcation parameter; a connecting edge $\boldsymbol{e_{uv}}$ between the vertex **u** and the vertex $\boldsymbol{v}$ is used as an interaction parameter; and $\boldsymbol{e_{uv}}$ indicates whether the vertex **u** and the vertex **v** are connected.

10. The method according to any one of claims 1 to 8, wherein the combinatorial optimization problem is a traveling salesman problem, the constraint condition is m cities and a distance between each pair of cities, and a solution in which a loop of visiting each city once and returning to an origin city is shortest is to be obtained under the constraint condition; and mapping the combinatorial optimization problem to a Potts model comprises:

determining that the Potts model for the traveling salesman problem is:

$$\boldsymbol{D(x_v)} = \sum_{(uv) \in E} \boldsymbol{w_{uv}} \delta(\boldsymbol{e^{i\theta_u}} \cdot \boldsymbol{e^{i2\pi/q}}, \boldsymbol{e^{i\theta_v}})$$

wherein $D(x_v)$ is a distance of the shortest loop; m to-be-solved complex variables $|x_y|e^{i\theta_v}$ are set; $v$ and $\boldsymbol{u}$ represent cities; a phase $\theta_v$ represents a visiting ranking of the city $v$; $w_{uv}$ is used as an interaction parameter, and represents a distance between the city u and the city v; $\delta(\boldsymbol{e^{i\theta_u}} \cdot \boldsymbol{e^{i2\pi/q}}, \boldsymbol{e^{i\theta_v}})$ is an objective function, and is used to describe a next possible city to visit; $e^{i\theta_u}$ represents the city $u$ that is first visited; $q$ is a multi-bifurcation parameter; $e^{i2\pi/q}$ is a ranking number of the visited city plus 1, and represents a next city to visit; when $e^{i\theta_u} \cdot e^{i2\pi/q} = e^{i\theta_v}$, the objective function $\delta = 1$, representing that the next city to visit is the city v; or when $e^{i\theta_u} \cdot e^{i2\pi/q} \neq e^{i\theta_v}$, the objective function $\delta = 0$, representing that the next city to visit is not the city v; and a city number m is used as a multi-bifurcation parameter.

11. The method according to any one of claims 1 to 10, wherein the spin model comprises a Potts model or an XY model.

12. An electronic device, comprising:

at least one memory, configured to store a program; and
at least one processor, configured to execute the program stored in the memory, wherein when the program stored in the memory is executed, the processor is configured to perform the method according to any one of claims 1 to 11.

13. A computer storage medium, wherein the computer storage medium stores instructions; and when the instructions are run on a computer, the computer is caused to perform the method according to any one of claims 1 to 11.

| Determine a spin model based on a combinatorial optimization task | S11 |

$\downarrow$

| Determine that a dynamic equation for an optimal solution to the spin model includes at least a control variable, a multi-bifurcation parameter, and an action parameter | S12 |

$\downarrow$

| Change the control variable to drive a complex variable to transit from a single stable state to a plurality of stable states | S13 |

$\downarrow$

| Determine q phase angles of the complex variable based on q stable states, to obtain a solution to the combinatorial optimization task | S14 |

FIG. 1

FIG. 2a

FIG. 2b

FIG. 3

FIG. 4a

FIG. 4b

FIG. 5a

FIG. 5b

Problem obtaining module 91

Model conversion module 92

Dynamic equation determining module 93

Equation solving module 94

FIG. 6

Electronic device 1000

Memory 1001

Storage medium 1003

Processor 1002

FIG. 7

## INTERNATIONAL SEARCH REPORT

| International application No. |
|---|
| **PCT/CN2024/105388** |

| A. | CLASSIFICATION OF SUBJECT MATTER |
|---|---|

G06F17/10(2006.01)i; G06F17/11(2006.01)i

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 组合优化, 求解, 映射, 自旋模型, 伊辛模型, potts模型, 分岔, 相位, combinatorial optimization, solving, mapping, spin model, ising model, potts model, branch, phase

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116150385 A (SHANGHAI TURING ZHISUAN QUANTUM TECHNOLOGY CO., LTD.) 23 May 2023 (2023-05-23) description, paragraphs [0031]-[0081], and figures 1-2 | 1-13 |
| A | CN 113392580 A (INFORMATION ENGINEERING UNIVERSITY OF PLA) 14 September 2021 (2021-09-14) entire document | 1-13 |
| A | CN 113646784 A (KABUSHIKI KAISHA TOSHIBA et al.) 12 November 2021 (2021-11-12) entire document | 1-13 |
| A | CN 115131422 A (SHANGHAI TURING ZHISUAN QUANTUM TECHNOLOGY CO., LTD.) 30 September 2022 (2022-09-30) entire document | 1-13 |
| A | CN 116363876 A (BEIJING JIAOTONG UNIVERSITY) 30 June 2023 (2023-06-30) entire document | 1-13 |
| A | US 2017104493 A1 (KABUSHIKI KAISHA TOSHIBA) 13 April 2017 (2017-04-13) entire document | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2024** | **22 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/105388**

| C. | DOCUMENTS CONSIDERED TO BE RELEVANT | |
|---|---|---|
| Category* | Citation of document, with indication, where appropriate, of the relevant passages | Relevant to claim No. |
| A | US 2022019714 A1 (KABUSHIKI KAISHA TOSHIBA et al.) 20 January 2022 (2022-01-20) entire document | 1-13 |

Form PCT/ISA/210 (second sheet) (July 2022)

## INTERNATIONAL SEARCH REPORT
### Information on patent family members

International application No.

**PCT/CN2024/105388**

| Patent document cited in search report | | | Publication date (day/month/year) | Patent family member(s) | | | Publication date (day/month/year) |
|---|---|---|---|---|---|---|---|
| CN | 116150385 | A | 23 May 2023 | None | | | |
| CN | 113392580 | A | 14 September 2021 | None | | | |
| CN | 113646784 | A | 12 November 2021 | JPWO | 2020196862 | A1 | 01 October 2020 |
| | | | | CA | 3135128 | A1 | 01 October 2020 |
| | | | | US | 2022012387 | A1 | 13 January 2022 |
| | | | | WO | 2020196862 | A1 | 01 October 2020 |
| CN | 115131422 | A | 30 September 2022 | None | | | |
| CN | 116363876 | A | 30 June 2023 | None | | | |
| US | 2017104493 | A1 | 13 April 2017 | JP | 6530326 | B2 | 12 June 2019 |
| US | 2022019714 | A1 | 20 January 2022 | JP | 2020154524 | A | 24 September 2020 |
| | | | | CA | 3133795 | A1 | 24 September 2020 |
| | | | | WO | 2020189315 | A1 | 24 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310898465